# EUROPEAN PATENT SPECIFICATION

(11) **EP 4 417 009 B1**
(45) Date of publication and mention of the grant of the patent: **01.10.2025**
(21) Application number: 22797860.8
(22) Date of filing: 13.10.2022
(51) Int. Cl.: H04W 76/15, H04W 76/19, H04W 76/27, H04W 76/28

(54) **PRESERVING SCG FAILURE INFORMATION WHEN MCG SUSPENDED**
ERHALTUNG VOM INFORMATION EINES AUSFALLS IN DER SCG BEI UNTERBROCHENEN MCG
SAUVEGARDE DES INFORMATIONS DE DÉFAILLANCE D'UN SCG QUAND LE MCG EST SUSPENDU

(30) Priority: 13.10.2021 US 202163255182 P
(43) Date of publication of application: 21.08.2024
(73) Proprietor: Telefonaktiebolaget LM Ericsson (publ), 164 83 Stockholm (SE)
(72) Inventor: TORABIAN ESFAHANI, Tahmineh, 192 51 SOLLENTUNA (SE); RAMACHANDRA, Pradeepa, 589 29 LINKÖPING (SE); BELLESCHI, Marco, 171 55 SOLNA (SE)
(74) Representative: Ericsson
(86) International application number: PCT/IB2022/059830
(87) International publication number: WO 2023/062585

(56) References cited:
- EP-A1- 3 048 854
- EP-A1- 3 606 223
- US-A1- 2021 068 186

## Description

### TECHNICAL FIELD

Embodiments of the present disclosure are directed to wireless communications and, more particularly, to preserving secondary cell group (SCG) failure information when the master cell group (MCG) is suspended.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Third Generation Partnership Project (3GPP) wireless networks support a feature referred to as multiple-radio dual-connectivity (MR-DC). While configured with MR-DC a user equipment (UE) is configured to monitor the PSCell and may detect a secondary cell group (SCG) radio link failure (RLF) or S-RLF. When that happens, an SCG failure report is typically transmitted via the master cell group (MCG). The SCG Failure Information procedure is provided in section 5.7.3 as described in RRC (TS 38.331):

### 5.7.3 SCG failure information

### 5.7.3.1 General

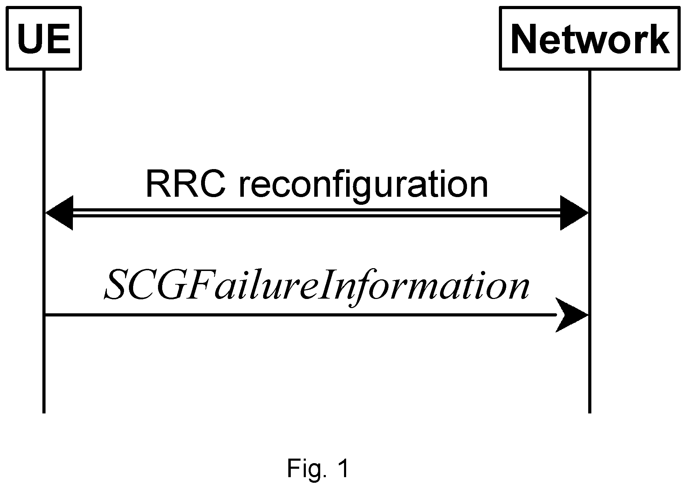

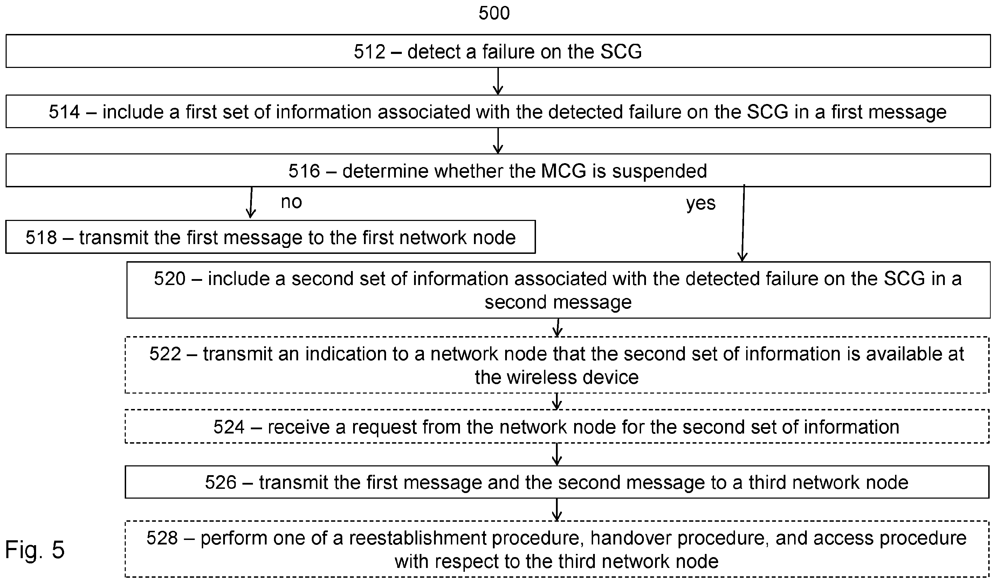

FIGURE 1 is a flow diagram illustrating SCG failure information reporting (reproduced from Figure 5.7.3.1-1 TS 38.331).

The purpose of this procedure is to inform E-UTRAN or NR MN about an SCG failure the UE has experienced i.e. SCG radio link failure, failure of SCG reconfiguration with sync, SCG configuration failure for RRC message on SRB3, SCG integrity check failure, and consistent uplink LBT failures on PSCell for operation with shared spectrum channel access.

### 5.7.3.2 Initiation

A UE initiates the procedure to report SCG failures when neither MCG nor SCG transmission is suspended and when one of the following conditions is met:
1>upon detecting radio link failure for the SCG, in accordance with subclause 5.3.10.3;
1>upon reconfiguration with sync failure of the SCG, in accordance with subclause 5.3.5.8.3;
1>upon SCG configuration failure, in accordance with subclause 5.3.5.8.2;
1>upon integrity check failure indication from SCG lower layers concerning SRB3.

Upon initiating the procedure, the UE shall:
1> suspend SCG transmission for all SRBs and DRBs;
1>reset SCG MAC;
1> stop T304 for the SCG, if running;
1> stop conditional reconfiguration evaluation for CPC, if configured;
1>if the UE is in (NG)EN-DC:
   2> initiate transmission of the *SCGFailureInformationNR* message as specified in TS 36.331, clause 5.6.13a.
1>else:
   2> initiate transmission of the *SCGFailureInformation* message in accordance with 5.7.3.5.

The content of the SCG Failure report contains a failure type, MCG related measurements and SCG related measurements. The SCG related measurements are included in secondary node (SN) format, in a container, and the setting of the information is defined in 5.7.3.4, as shown below:
The SCG failure may be forwarded from the secondary node to the master node (MN) in CG-ConfigInfo. Upon reception of the MCG measurements, the MN can determine the actions to be performed, e.g. release the SN, change the SN, etc.

However, the SCG measurements may in principle be useful for further procedures. Thus, SCG measurements that have been received at the MN within an SCG Failure report (within SCGFailureInformation message) may be forwarded, e.g., when the MN releases and/or modifies the UE context at the SN within the radio resource control (RRC) container CG-ConfigInfo, as defined in TS 38.331, when the master eNB or gNB requests the SgNB or SeNB to perform certain actions, e.g., to establish, modify or release an SCG, as shown below:
According to the field description for the RRC container CG-ConfigInfo, scgFailureInfo contains SCG failure type and measurement results. If the sender has no measurement results available, the sender may include one empty entry (i.e., without any optional fields present) in measResultPerMOList. This field is used in (NG)EN-DC and NR-DC. The scgFailureInfoEUTRA contains SCG failure type and measurement results of the EUTRA secondary cell group. This field is only used in NE-DC.

According to TS 38.423, for example in MR-DC cases connected to 5GC, the RRC container CG-ConfigInfo, can be included in the following messages from MN to SN:
- S-NODE ADDITION REQUEST;
- S-NODE RECONFIGURATION COMPLETE;
- S-NODE MODIFICATION REQUEST;
- S-NODE MODIFICATION REFUSE;
- S-NODE RELEASE REQUEST.

However, in the particular use case where the MN receives an SCG Failure report for the UE, and where a UE context is still established in the SN, the MN would typically send a S-NODE MODIFICATION REQUEST or a S-NODE RELEASE REQUEST, to modify or release the SN.

Even while configured with Multi-Radio Dual Connectivity (MR-DC), a UE still monitors the PCell and may detect a MCG RLF (M-RLF). When that happens, either an MCG failure report is transmitted via the SCG, or a re-establishment procedure is triggered. A relevant section of the standard is reproduced below.

### 5.3.10.3 Detection of radio link failure

The UE shall:
1>if any DAPS bearer is configured:
   ...
1>else:
   2>upon T310 expiry in PCell; or
   2>upon T312 expiry in PCell; or
   2>upon random access problem indication from MCG MAC while neither T300, T301, T304, T311 nor T319 are running; or
   2>upon indication from MCG RLC that the maximum number of retransmissions has been reached; or
   2>if connected as an IAB-node, upon BH RLF indication received on BAP entity from the MCG; or
   2>upon consistent uplink LBT failure indication from MCG MAC while T304 is not running:
      3>if the indication is from MCG RLC and CA duplication is configured and activated, and for the corresponding logical channel *allowedServingCells* only includes SCell(s):
         4>initiate the failure information procedure as specified in 5.7.5 to report RLC failure.
      3>else:
         4> consider radio link failure to be detected for the MCG i.e. RLF;
         4> discard any segments of segmented RRC messages stored according to 5.7.6.3;
         4> store the following radio link failure information in the *VarRLF-Report* by setting its fields as follows:
            // setting the content of RLF report ...
         4>if AS security has not been activated:
            5> perform the actions upon going to RRC_IDLE as specified in 5.3.11, with release cause 'other';-
         4> else if AS security has been activated but SRB2 and at least one DRB or, for IAB, SRB2, have not been setup:
            5> store the radio link failure information in the *VarRLF-Report* as described in subclause 5.3.10.5;
            5>perform the actions upon going to RRC_IDLE as specified in 5.3.11, with release cause 'RRC connection failure';
         4>else:
            5> store the radio link failure information in the *VarRLF-Report* as described in subclause 5.3.10.5;
            5>if T316 is configured; and
            5>if SCG transmission is not suspended; and
            5>if PSCell change is not ongoing (i.e. timer T304 for the NR PSCell is not running in case of NR-DC or timer T307 of the E-UTRA PSCell is not running as specified in TS 36.331, clause 5.3.10.10, in NE-DC):
               6> initiate the MCG failure information procedure as specified in 5.7.3b to report MCG radio link failure.
            5> else:
               6>initiate the connection re-establishment procedure as specified in 5.3.7.

The UE may discard the radio link failure information, i.e. release the UE variable *VarRLF-Report,* 48 hours after the radio link failure is detected.

The RLF report may be forwarded from the re-establishment node to the source node. If an MCG failure report is transmitted, the SN can send an RRC transfer message to the MN, so the MN can take the appropriated actions. If instead, re-establishment is triggered, the UE include an indication that an RLF report is available in the RRCReestablishmentComplete message so the node where the UE has re-established can retrieve the RLF report via UE information request. Then, the RLF report may be included in an *UEInformationResponse.*

After that message is received, the re-establishment node can retrieve in the RLF report the information regarding the cell where the UE has failed, so that it can forward the RLF report to the source node.

The Failure Indication procedure is used for that purposed, as defined in TS 38.423 (see 8.4.7). The purpose of the procedure is to transfer information regarding RRC re-establishment attempts, or received RLF Reports, between NG-RAN nodes. The signaling takes place from the NG-RAN node at which a re-establishment attempt is made, or an RLF Report is received, to an NG-RAN node to which the UE concerned may have previously been attached prior to the connection failure. This may aid the detection of radio link failure and handover failure cases. The procedure uses non UE-associated signaling.

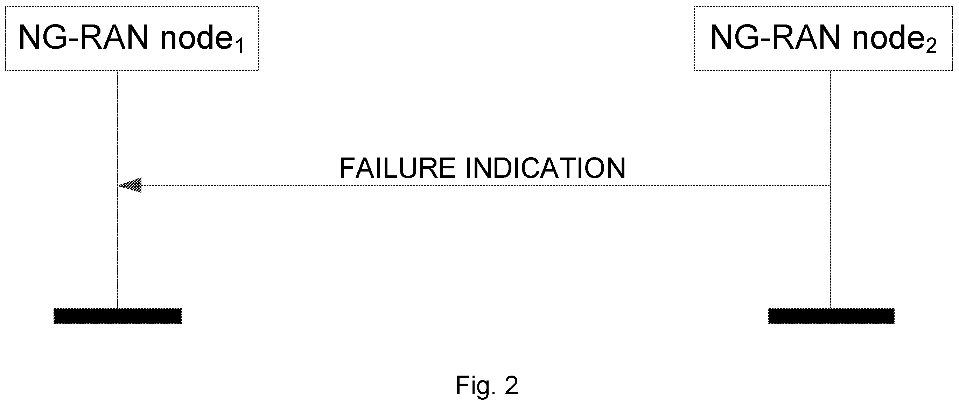

FIGURE 2 is a flow diagram illustrating an example failure indication. NG-RAN node₂ initiates the procedure by sending the FAILURE INDICATION message to NG-RAN node₁, following a re-establishment attempt or an RLF Report reception from a UE at NG-RAN node₂, when NG-RAN node₂ considers that the UE may have previously suffered a connection failure at a cell controlled by NG-RAN node₁. If the *UE RLF Report Container* IE is included in the FAILURE INDICATION message, NG-RAN node₂ shall use it to derive failure case information.

The failure indication message includes the following fields.

### FAILURE INDICATION

| IE/Group Name | | Presence | Range | IE type and reference | Semantics description | Criticality | Assigned Criticality |
|---|---|---|---|---|---|---|---|
| Message Type | | M | | 9.2.3.1 | | YES | ignore |
| ··· | | ··· | | | | ··· | ·· |
| | >>UE RLF Report Container | O | | 9.2.2.59 | *nr-RLF-Report-r*16 IE contained in the *UEInformation Response* message (TS 38.331) or *RLF-Report-r9* IE contained in the *UEInformation Response* message (TS 36.331) | | |

| Condition | Explanation |
|---|---|
| ifUERLFReportContainerAbsent | This IE shall be present if the UE RLF Report Container IE is absent |

There currently exist certain challenges. For example, in NR or EUTRA Dual-Connectivity (DC) operation, the SCGFailureInformation procedure is initiated when SCG failure is experienced by a UE. The connection failure type in this message can be due to either 1) SCG RLF, 2) PSCell addition or 3) PSCell change failure. The SCGFailureInformation message is signaled immediately to the MN after SCG RLF to provide information regarding NR SCG failures detected by UE. At the time of failure, the MN has the UE context and is aware of the source and target PSCells for inter-gNB PSCell change. Moreover, the UE context is available in the SN at the time of failure and if the SN receives the SCGFailureInformation likely to the MN, the SN shall be aware of the source and target PSCells.

In addition, the SCG failure information contains failureType, which may be set to synchReconfigFailureSCG when the UE has declared SCG change failure, or it may be set to any other value when SCG failure experienced by UE is due to SCG RLF. Example abstract syntax notation if included below.

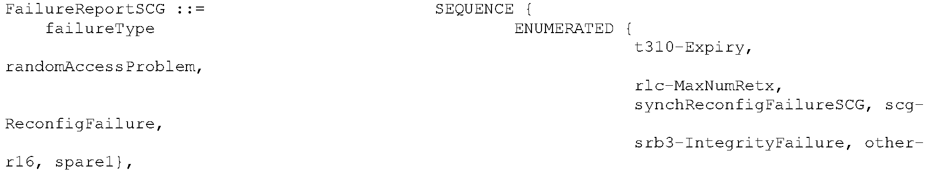

When the UE declares the SCG failure, it populates the fields in the SCGFailureInformation and attempts to send this message to the MN. If the MN is not suspended, then the UE sends SCGFailureInformation to the MN and based on the UE context at the network (MN and/or SN) and the contents of SCGFailureInformation, the network can classify a failure as a too late handover or a too early handover or a handover to a wrong cell (handover here refers to PSCell change or SN change).

For example, if the UE includes *'synchReconfigFailureSCG'* as the failureType in the SCGFailureInformation message, then the failure occurred due to the expiry of T304 timer and thus the UE had successfully received the PSCell change command. This is not a too late handover candidate. If the UE includes anything other than *'synchReconfigFailureSCG'* as the failureType in the SCGFailureInformation message, then the failure occurred in the source cell and thus this could be a too late handover candidate.

Therefore, there is no need to include further information such as failedPSCellID, previousPSCellID, etc. in the SCGFailureInformation message because the network can derive this information implicitly based on the contents of SCGFailureInformation and the UE context at the network side. Thus, by not including these fields, the size of the message remains small, which is a good principle for a mandatory message.

However, when the UE declares the SCG failure, if the MN is suspended, then the UE cannot send the SCGFailureInformation to the MN. Even if the UE embeds the SCGFailureInformation in the RLF report, the network will not be able to figure out which cell was the failedPSCellID or previousPSCellID at the time of declaring SCG failure because the reception time of the RLF report that includes SCGFailureInformation might be delayed.

The patent application published as EP3048854 shows another method in which after detecting a failure a first message with information about the failure is sent.

### SUMMARY

Based on the description above, certain challenges currently exist with preserving secondary cell group (SCG) failure information when the master cell group (MCG) is suspended. Certain aspects of the present disclosure and their embodiments may provide solutions to these or other challenges. The invention is defined by the claims.

Particular embodiments include user equipment (UE) embodiments. Some embodiments include a method performed by a UE. The method comprises: detecting a failure on a secondary cell group; storing a first set of information in a first message, the first set of information associated to the detected failure on the secondary cell group; checking the status of a master cell group; upon detecting the master cell group is not suspended, transmitting the first message including the first set of information to a first network node; upon detecting the master cell group is suspended, storing a second set of information in a second message, the second set of information associated to the detected failure on the secondary cell group and transmitting the first message and the second message to a third network node in a third message.

In particular embodiments, the method further comprises performing either a reestablishment procedure or a handover or an access (radio resource control (RRC) resume or RRC Setup procedure) towards the third network node. In some embodiments, the first message and the second message are the same message, e.g., a *SCGFailureInformation* message.

In particular embodiments, the second set of information includes one or more of the following: (a) the cell identifier of the PSCell in which the UE detected the failure; (b) the cell identifier of the PSCell in which the UE received the last executed reconfiguration with sync message for the SCG; (c) the time between the reception of the last execute reconfiguration with sync message for the SCG and the time of detecting the failure; and/or (d) the cell identifier of the PCell at the time of declaring the failure.

Some embodiments not included in the claimed subject-matter include network node embodiments. Particular embodiments include a method performed by a first network node operating as a master network node (MN) for a UE. The method comprises: receiving either a first message from the UE or a third message from a third network node; identifying the second network node associated to a secondary cell group failure detected by the UE based on the first message or the third message; and transmitting the received first message and the second message to the second network node.

Particular embodiments include a method performed by a third network node comprising receiving a third message from a UE consisting of a first message and a second message; identifying a first network node based on the third message; and sending the received third message to the first network node;
In general, a UE includes additional information related to previous PSCell identity, failed PSCell identity, time since the reception of the PSCell change command, etc. only when the UE is unable to transmit the secondary cell group failure related information to the MN immediately after declaring the secondary cell group failure.

According to some embodiments, a method is performed by a wireless device operating in dual connectivity with a MCG comprising a first network node and a SCG comprising a second network node. The method comprises: detecting a failure on the SCG; including a first set of information associated with the detected failure on the SCG in a first message; and determining whether the MCG is suspended. Upon determining the MCG is not suspended, the method comprises transmitting the first message to the first network node. Upon determining the MCG is suspended, the method comprises including a second set of information associated with the detected failure on the SCG in a second message and transmitting the first message and the second message to a third network node.

In particular embodiments, the method further comprising performing one of a reestablishment procedure, handover procedure, and access procedure with respect to the third network node.

In particular embodiments, the first message and the second message comprise a combined message including the first set of information and the second set of information.

In particular embodiments, the second set of information includes one or more of: a cell identifier of a PSCell in which the wireless device detected the failure; a cell identifier of a PSCell in which the wireless device received a last executed reconfiguration with sync message for the SCG; a time between a reception of a last executed reconfiguration with sync message for the SCG and a time of detecting the failure; and a cell identifier of a PCell at a time of declaring the failure. The second set of information may include one or more of a failure type and a time of failure. The second set of information may include random access information.

In particular embodiments, detecting the failure on the SCG comprises one of detecting a radio link failure and detecting a handover failure.

In particular embodiments, the method further comprises transmitting an indication to a network node that the second set of information is available at the wireless device and receiving a request from the network node for the second set of information.

According to some embodiments not included in the claimed subject-matter, a wireless device comprises processing circuitry operable to perform any of the wireless device methods described above.

Also disclosed is a computer program product not included in the claimed subject-matter comprising a non-transitory computer readable medium storing computer readable program code, the computer readable program code operable, when executed by processing circuitry to perform any of the methods performed by the wireless device described above.

According to some embodiments, a method performed by a third network node comprises receiving a message from a wireless device operating in dual connectivity with a MCG and a SCG. The message includes a set of information with respect to a failure detected by the wireless device with respect to the SCG. The method further comprises transmitting the set of information with respect to the detected failure to a first network node in the MCG.

In particular embodiments, the set of information includes one or more of: a cell identifier of a PSCell in which the wireless device detected the failure; a cell identifier of a PSCell in which the wireless device received a last executed reconfiguration with sync message for the SCG; a time between a reception of a last executed reconfiguration with sync message for the SCG and a time of detecting the failure; and a cell identifier of a PCell at a time of declaring the failure. The set of information may include one or more of a failure type and a time of failure. The set of information may include random access information.

In particular embodiments, the failure on the SCG comprises one of a radio link failure and a handover failure.

In particular embodiments, the method further comprises receiving an indication from the wireless device that the set of information is available at the wireless device and transmitting a request to the wireless device for the set of information.

According to some embodiments not included in the claimed subject-matter, a network node comprises processing circuitry operable to perform any of the network node methods described above.

Also disclosed is a computer program product not include in the claimed subject-matter comprising a non-transitory computer readable medium storing computer readable program code, the computer readable program code operable, when executed by processing circuitry to perform any of the methods performed by the network node described above.

Certain embodiments may provide one or more of the following technical advantages. For example, in particular embodiments SCG related random access (RA) information is useful in optimizing the RA parameters of SCG related cells. A UE is able to transmit PSCell change failure information to a radio access network (RAN) node. In particular, the network is able to fetch the PSCell change failure information in dual connectivity (DC) operation when T304 of a SCG expires and MCG transmission is suspended. Therefore, the RAN is able to analyze rando access channel (RACH) performance for live mobility policy optimization.

Further, because the information fields like previous PSCell identity (previousPSCell), failed PSCell identity (failedPSCell), and/or time since the reception of the PSCell change command (timeConnFailurePSCell) are included only if the MCG is suspended at the time of SCGFailureInformation transmission, the size of the SCGFailureInformation message transmitted over the air is smaller, which increases the chance of successful transmission of SCGFailureInformation.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 is a flow diagram illustrating SCG failure information reporting;
FIGURE 2 is a flow diagram illustrating an example failure indication;
FIGURE 3 is a block diagram illustrating an example wireless network;
FIGURE 4 illustrates an example user equipment, according to certain embodiments;
FIGURE 5 is flowchart illustrating an example method in a wireless device, according to certain embodiments;
FIGURE 6 is flowchart illustrating an example method in a network node, according to certain embodiments;
FIGURE 7 illustrates a schematic block diagram of a wireless device and a network node in a wireless network, according to certain embodiments;
FIGURE 8 illustrates an example virtualization environment, according to certain embodiments;
FIGURE 9 illustrates an example telecommunication network connected via an intermediate network to a host computer, according to certain embodiments;
FIGURE 10 illustrates an example host computer communicating via a base station with a user equipment over a partially wireless connection, according to certain embodiments;
FIGURE 11 is a flowchart illustrating a method implemented, according to certain embodiments;
FIGURE 12 is a flowchart illustrating a method implemented in a communication system, according to certain embodiments;
FIGURE 13 is a flowchart illustrating a method implemented in a communication system, according to certain embodiments; and
FIGURE 14 is a flowchart illustrating a method implemented in a communication system, according to certain embodiments.

### DETAILED DESCRIPTION

As described above, certain challenges currently exist with preserving secondary cell group (SCG) failure information when the master cell group (MCG) is suspended. Certain aspects of the present disclosure and their embodiments may provide solutions to these or other challenges.

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The terminology SCGFailureInformation is used herein to indicate a message that includes SCG failure related information. The terminology may be used interchangeably with SCGFailureInformationNR message and SCGFailureInformationEUTRA message in TS 36.331 and TS 38.331, respectively.

Particular embodiments are described with respect to fifth generation (5G) New Radio (NR) radio access technology. However, the embodiments are equally applicable to any other radio access technology that supports dual connectivity. The embodiments described herein are applicable for any other technology related to multi connectivity wherein there is a failure reporting of first connection towards a second connection.

Particular embodiments comprise a method at a wireless terminal (also referred to as a user equipment (UE)). The method comprises detecting a failure on a secondary cell group that applies for one or both of SCG radio link failure (RLF) and handover (HO) and storing a first set of information in existing contents of SCGFailureInformation in a first message. The first set of information is associated with the detected failure on the secondary cell group.

Some embodiments include checking the status of a master cell group. Upon detecting the master cell group is not suspended, the method comprises transmitting the first message including the first set of information to a first network node.

Upon detecting the master cell group is suspended; the UE stores a second set of information in a second message, the second set of information associated to the detected failure on the secondary cell group. In some embodiments, the UE stores PSCell change failure information (second set of information): The information may include previousPSCellID related to NR/EUTRA SCG failures in which the UE received the last executed reconfiguration with sync message for the SCG. This parameter may be optional. For example, if the connection failure type is due to PSCell addition, e.g., the first PSCell addition, this parameter may not be included.

Additional information stored in the second message may include PCellID related to NR/EUTRA MCG failures, failedPSCellID related to NR/EUTRA SCG failures, connectionFailureType related to NR/EUTRA SCG failures, timeConnFailure related to NR/EUTRA SCG failures (not included if the connection failure type is due to PSCell addition e.g., the first PSCell addition), and/or perRAInfoList field related to NR SCG failures.

An implementation example is given below:

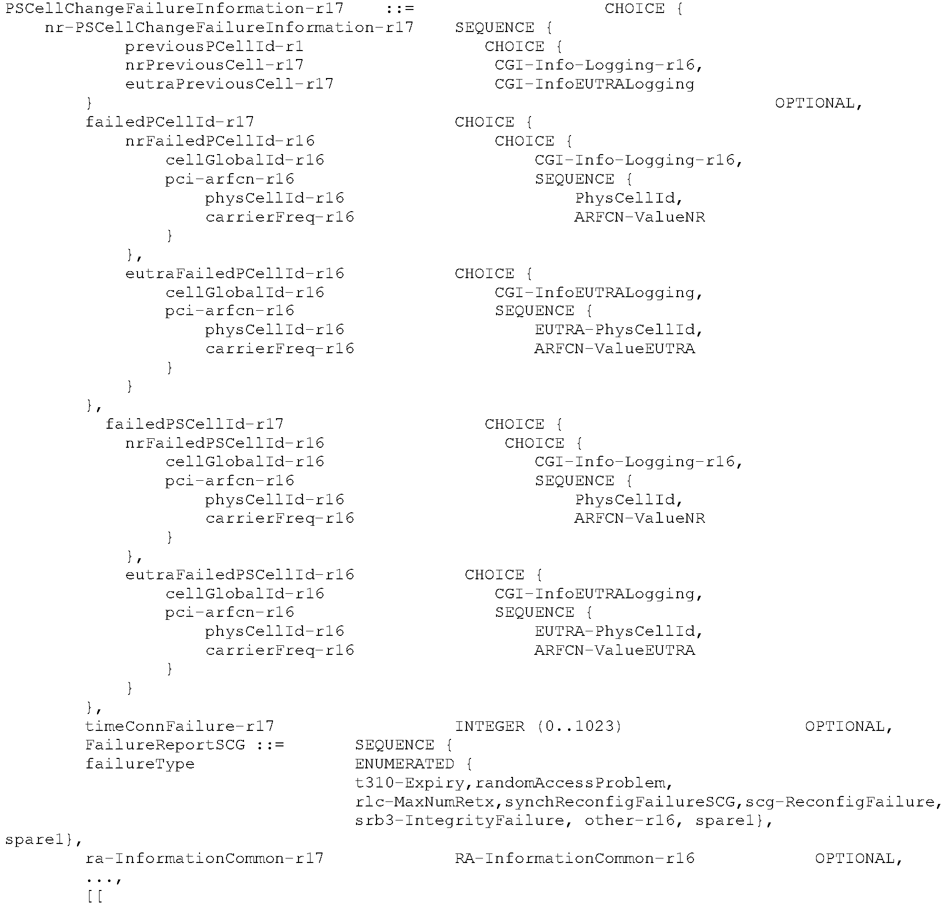

In some embodiments, the UE stores the PSCell change failure information in a separate variable associated to the SCG compared to the variable associated to the MCG. An implementation example is given below:

### T304 expiry (Reconfiguration with sync Failure)

The UE shall:
···
1>else if T304 of a secondary cell group expires:
   2>if MCG transmission is not suspended:
      3>release dedicated preambles provided in rach-ConfigDedicated, if configured;
      3>initiate the SCG failure information procedure as specified in subclause 5.7.3 to report SCG reconfiguration with sync failure, upon which the RRC reconfiguration procedure ends;
   2>else:
      3> store the PSCell change failure information in VarPSCellChangeFailureInformation-Report as described in the subclause 5.3.10.5
      3>if the UE is in NR-DC:
         4>initiate the connection re-establishment procedure as specified in subclause 5.3.7;
      3>else (the UE is in (NG) EN-DC):
         4>initiate the connection re-establishment procedure as specified in TS 36.331, subclause 5.3.7;
1>else if T304 expires when RRCReconfiguration is received via other RAT (HO to NR failure):
   2>reset MAC;
   2>perform the actions defined for this failure case as defined in the specifications applicable for the other RAT.

NOTE 2: In this clause, the term 'handover failure' has been used to refer to 'reconfiguration with sync failure'.

In some embodiments, the UE performs either a reestablishment procedure or an access towards the third network node. The UE includes the PSCell change failure information in either RRCReestablishmentComplete or RRCReconfigurationComplete message after RRCReestablishmentComplete message or RRCSetupComplete, when the UE is capable of storing the PSCell change failure information. An implementation example is given below:

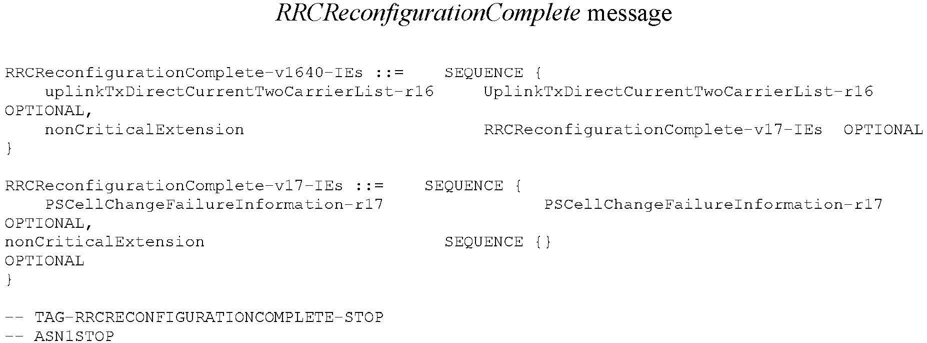

In some embodiments, the UE includes an explicit indication that the PSCell change failure information is available to be fetched by the network upon a request. If the UE has stored the information associated to SCG, the UE may include a flag in a RRC message, e.g., RRCReconfigurationComplete message after RRCReestablishmentComplete message RRCSetupComplete message or RRCReestablishmentComplete message. An implementation example is given below:

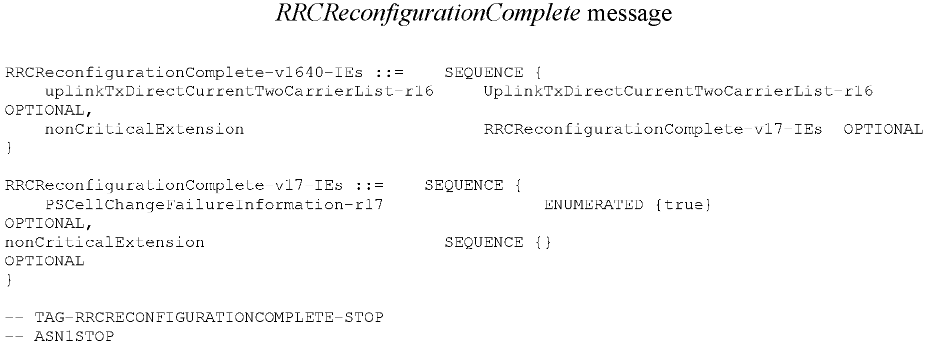

In some embodiments, the UE includes an explicit capability indication to the MN that the UE is capable of reporting the PSCell change failure information. The capability may be further separated in terms of the radio access technology (RAT) type of the SCG, e.g., the capability indication related to EUTRA or NR SCG.

In some embodiments, the UE includes an explicit capability indication to the SN that the UE is capable of reporting the PSCell change failure information. The capability may be further separated in terms of the RAT type of the SCG, e.g., the capability indication related to EUTRA or NR SCG.

In some embodiments, the MN explicitly includes an indication to the UE that it is interested in collecting the PSCell change failure information stored by the UE. The UE may report the PSCell change failure information upon RAN node request via an indication in the UEInformationRequest message or any other RRC messages. An implementation example is given below:

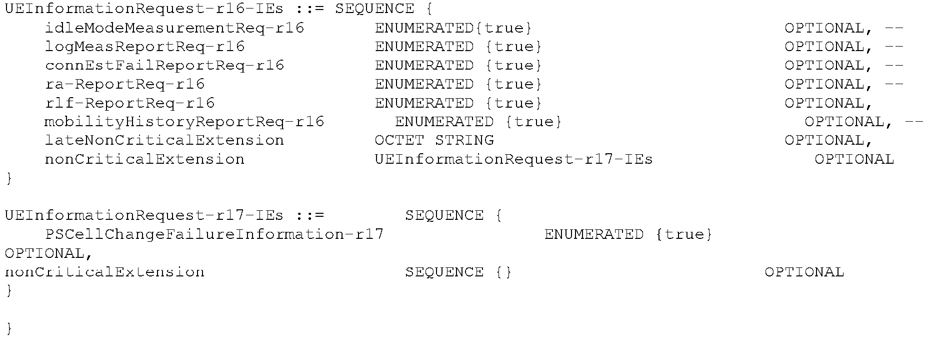

In some embodiments, if the failure is detected the UE reports the PSCell change failure information via an existing report, e.g., a SCGFailureInformation message or new report upon the network request in UEInformationRequest message to a third network node.

The following is a detailed description of solutions wherein the first set of information and the second set of information are transmitted in the SCGFailureInformation. The example implementation of SCGFailureInformation is provided below.

The SCGFailureInformation message is used to provide information regarding NR SCG failures detected by the UE.
Signalling radio bearer: SRB1
RLC-SAP: AM
Logical channel: DCCH
Direction: UE to Network

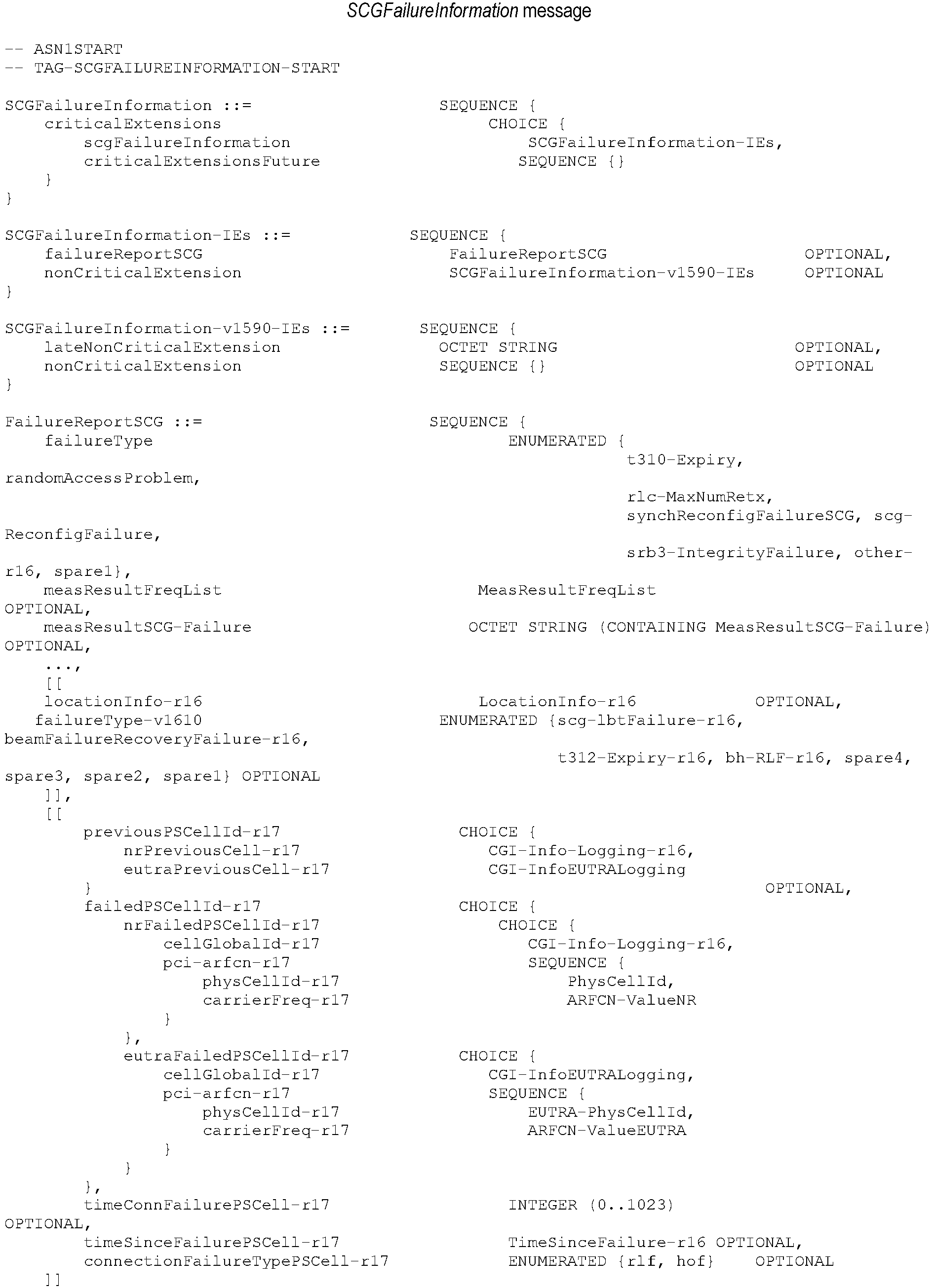

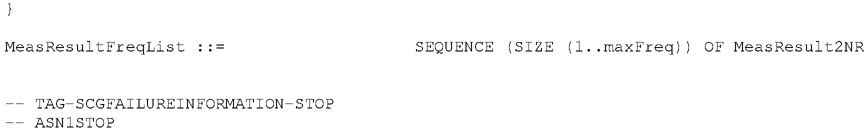

| *SCGFailureInformationfield descriptions* |
|---|
| *measResultFreqList* |
| The field contains available results of measurements on NR frequencies the UE is configured to measure by *measConfig.* |
| *measResultSCG-Failure* |
| The field contains the *MeasResultSCG-Failure* IE which includes available results of measurements on NR frequencies the UE is configured to measure by the NR SCG *RRCReconfiguration* message. |
| *failedPSCellId* |
| This field is used to indicate the PSCell in which RLF is detected or the target PSCell of the failed PSCell change. For intra-NR PSCell change *nrFailedPSCellId* is included and for the PSCell change from NR to EUTRA *eutraFailedPSCellld* is included. The UE sets the ARFCN according to the frequency band used for transmission/ reception when the failure occurred. This field is included only if the MCG was suspended at the time of attempting to transmit the SCGFailureInformation. |
| *previousPSCellId* |
| This field is used to indicate the source PSCell of the last PSCell change (source PSCell when the last *RRCReconfiguration* message including *reconfigurationWithSync* associated to the SCG was received). For intra-NR PSCell change *nrPreviousCell* is included and for the PSCell change from EUTRA to NR *eutraPreviousCell* is included. This field is included only if the MCG was suspended at the time of attempting to transmit the SCGFailureInformation. |
| *timeConnFailurePSCell* |
| This field is used to indicate the time elapsed since the last PSCell initialization until connection failure. Actual value = field value * 100ms. The maximum value 1023 means 102.3s or longer. This field is included only if the MCG was suspended at the time of attempting to transmit the SCGFailureInformation. |
| *timeSinceFailurePSCell* |
| This field is used to indicate the time that elapsed since the connection (radio link or handover) failure on the SCG. Value in seconds. The maximum value 172800 means 172800s or longer. This field is included only if the MCG was suspended at the time of |
| *connectionFailureTypePSCell* |
| This field is used to indicate whether the connection failure is due to radio link failure or handover failure on the SCG. This field is included only if the MCG was suspended at the time of attempting to transmit the SCGFailureInformation. |

Some embodiments comprise a method performed by a first network node operating as a master network node (MN) for a UE. The MN CU-CP (that could be the same or other MN CU-CP), upon receiving the PSCell change failure information associated to SCG, forwards the information to the corresponding SN CU-CP containing SN CU-CP (that could be the same or other SN CU-CP) containing associated cell identity.

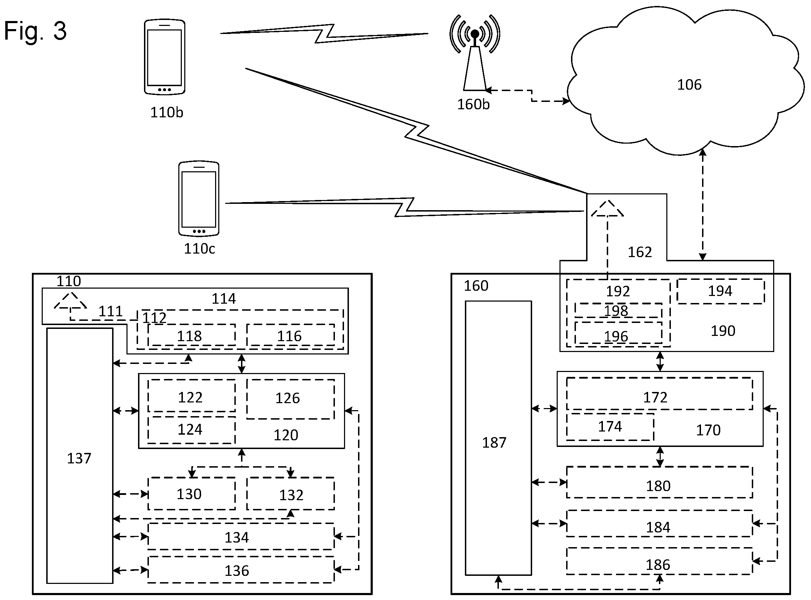

FIGURE 3 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 3, network node 160 includes processing circuitry 170, device readable medium 180, interface 190, auxiliary equipment 184, power source 186, power circuitry 187, and antenna 162. Although network node 160 illustrated in the example wireless network of FIGURE 3 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 3 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 3. For simplicity, the wireless network of FIGURE 3 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

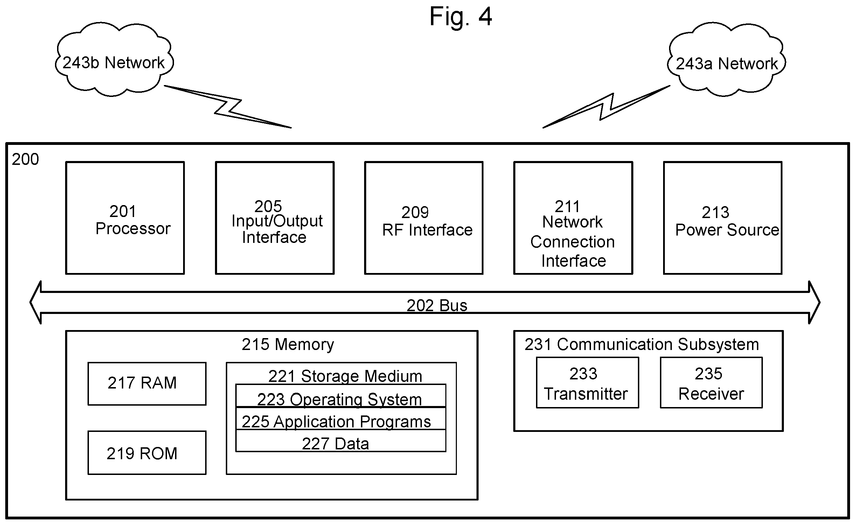

FIGURE 4 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3^{rd} Generation Partnership Project (3GPP), including a NB-IoT UE, a machine type communication (MTC) UE, and/or an enhanced MTC (eMTC) UE. UE 200, as illustrated in FIGURE 4, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although FIGURE 4 is a UE, the components discussed herein are equally applicable to a WD, and vice-versa.

In FIGURE 4, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may use all the components shown in FIGURE 4, or only a subset of the components. The level of integration between the components may vary from one UE to another UE. Further, certain UEs may contain multiple instances of a component, such as multiple processors, memories, transceivers, transmitters, receivers, etc.

In FIGURE 4, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 4, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 4, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

FIGURE 5 is a flowchart illustrating an example method in a wireless device, according to certain embodiments. In particular embodiments, one or more steps of FIGURE 5 may be performed by wireless device 110 described with respect to FIGURE 3. The wireless device is operating in dual connectivity with a MCG comprising a first network node and a SCG comprising a second network node.

The method begins at step 512, where the wireless device (e.g., wireless device 110) : detecting a failure on the SCG. For example, the wireless device may detect a radio link failure or a handover failure. In particular embodiments, the wireless device may detect any of the failures described in the embodiment and examples above.

At step 514, the wireless device includes a first set of information associated with the detected failure on the SCG in a first message. For example, the wireless device may include the information in a SCGFailureInformation message.

At step 516, the wireless device determines whether the MCG is suspended.. Upon determining the MCG is not suspended, the method continues to step 518, where the wireless device transmits the first message to the first network node. Because the first network node is not suspended, the first message includes enough information, in combination with context information for the wireless device stored at the first network node, for the network node to take appropriate action based on the first set of information.

Upon determining the MCG is suspended, the method continues to step 520, where the wireless device includes a second set of information associated with the detected failure on the SCG in a second message.

In particular embodiments, the second set of information includes one or more of: a cell identifier of a PSCell in which the wireless device detected the failure; a cell identifier of a PSCell in which the wireless device received a last executed reconfiguration with sync message for the SCG; a time between a reception of a last executed reconfiguration with sync message for the SCG and a time of detecting the failure; and a cell identifier of a PCell at a time of declaring the failure. The second set of information may include one or more of a failure type and a time of failure. The second set of information may include random access information. In particular embodiments, the second set of information includes any of the information in the embodiments and examples described above.

In some embodiments the method may continue to step 522, while in others the method may continue to step 526. At step 522, the wireless device transmitting an indication to a network node (e.g., third network node) that the second set of information is available at the wireless device. At step 524, the wireless device may receive a request from the network node for the second set of information. At step 526, the wireless device transmits the first message and the second message to a third network node.

In particular embodiments, the first message and the second message comprise a combined message including the first set of information and the second set of information.

A particular advantage is that the second set of information combined with the first set of information facilitate the first network node or another network node to take appropriate action based on the failure information at a later time, for example, when the MCG is not suspended. The additional information is only included when necessary, thus maintaining a reasonable message size when the MCG is not suspended.

The method may continue to step 528, where the wireless device performs one of a reestablishment procedure, handover procedure, and access procedure with respect to the third network node.

Modifications, additions, or omissions may be made to method 500 of FIGURE 5. Additionally, one or more steps in the method of FIGURE 5 may be performed in parallel or in any suitable order.

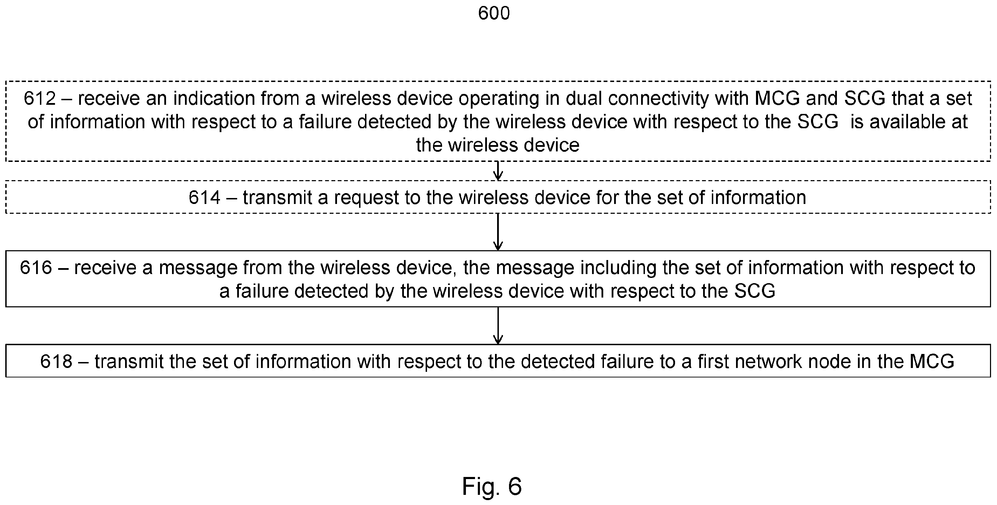

FIGURE 6 is a flowchart illustrating an example method in a network node, according to certain embodiments. In particular embodiments, one or more steps of FIGURE 6 may be performed by network node 160 described with respect to FIGURE 3. The network node may comprise the third network node described in the embodiments and examples above.

The method may begin at step 612, where the network node (e.g., network node 160) receives an indication from a wireless device operating in dual connectivity with MCG and SCG that a set of information with respect to a failure detected by the wireless device with respect to the SCG is available at the wireless device. The set of information is described above with respect to FIGURE 5 and includes the first set of information and the second set of information.

At step 614, the network node may transmit a request to the wireless device for the set of information. At step 616, the network node receives a message from the wireless device, the message including the set of information with respect to a failure detected by the wireless device with respect to the SCG. In some embodiments, the method may skip steps 612 and 614 and begin at step 616.

At step 618, the network node transmit the set of information with respect to the detected failure to a first network node in the MCG.

Modifications, additions, or omissions may be made to method 600 of FIGURE 6. Additionally, one or more steps in the method of FIGURE 6 may be performed in parallel or in any suitable order.

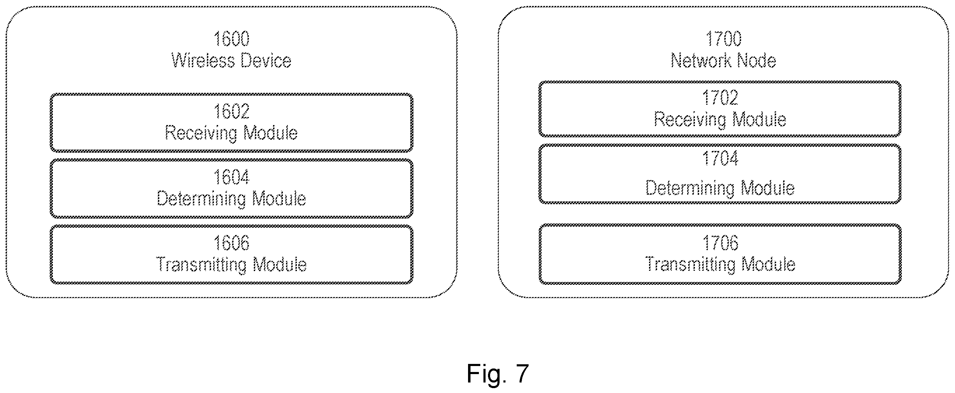

FIGURE 7 illustrates a schematic block diagram of two apparatuses in a wireless network (for example, the wireless network illustrated in FIGURE 3). The apparatuses include a wireless device and a network node (e.g., wireless device 110 and network node 160 illustrated in FIGURE 3). Apparatuses 1600 and 1700 are operable to carry out the example methods described with reference to FIGURES 5 and 6, respectively, and possibly any other processes or methods disclosed herein. It is also to be understood that the methods of FIGURES 5 and 6 are not necessarily carried out solely by apparatuses 1600 and/or 1700. At least some operations of the methods can be performed by one or more other entities.

Virtual apparatuses 1600 and 1700 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause receiving module 1602, determining module 1604, transmitting module 1606, and any other suitable units of apparatus 1600 to perform corresponding functions according one or more embodiments of the present disclosure. Similarly, the processing circuitry described above may be used to cause receiving module 1702, determining module 1704, transmitting module 1706, and any other suitable units of apparatus 1700 to perform corresponding functions according one or more embodiments of the present disclosure.

As illustrated in FIGURE 7, apparatus 1600 includes receiving module 1602 configured to receive a request information associated with a SCG failure according to any of the embodiments and examples described herein. Determining module 1604 is configured to determine whether a MCG is suspended according to any of the embodiments and examples described herein. Transmitting module 1606 is configured to transmit information associated with a SCG failure according to any of the embodiments and examples described herein.

As illustrated in FIGURE 7, apparatus 1700 includes receiving module 1702 configured to receive information associated with a SCG failure according to any of the embodiments and examples described herein. Determining module 1704 is configured to determine to request information associated with a SCG failure according to any of the embodiments and examples described herein. Transmitting module 1706 configured to transmit information associated with a SCG failure according to any of the embodiments and examples described herein.

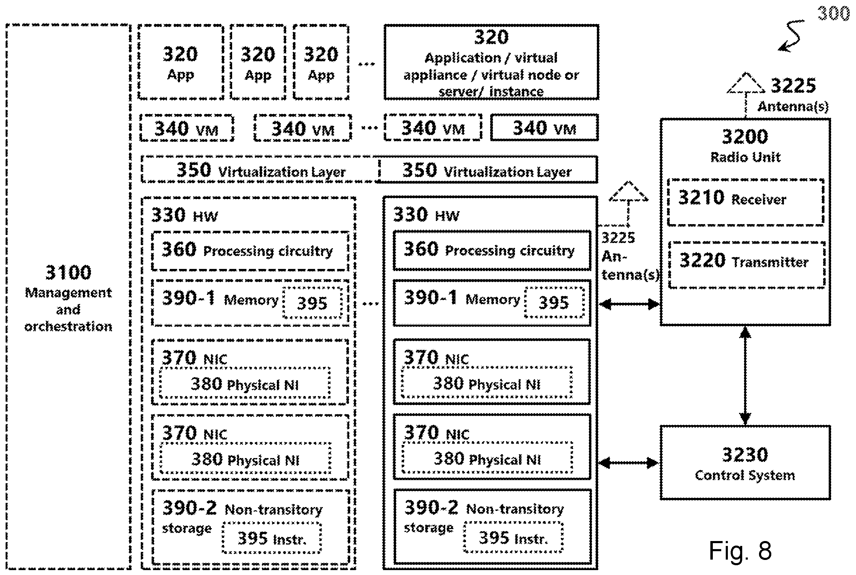

FIGURE 8 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 8, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in Figure 18.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

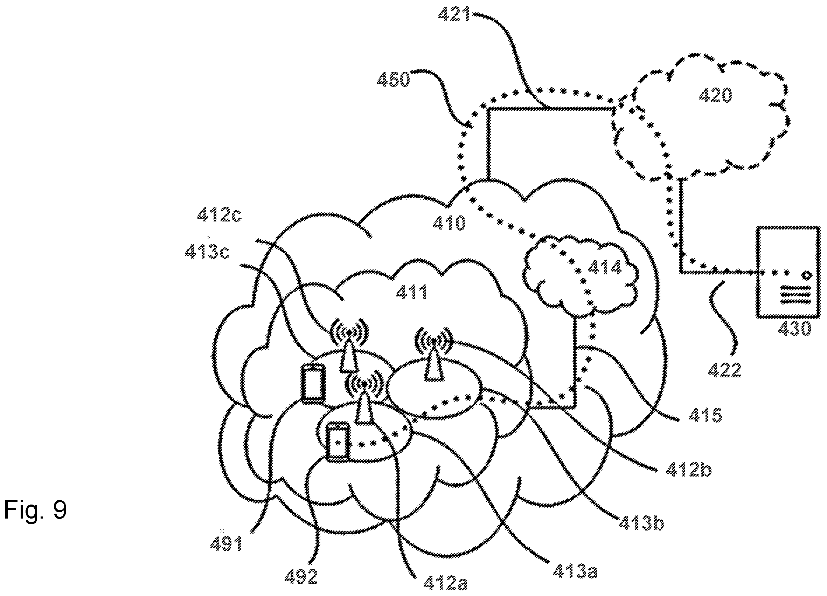

With reference to FIGURE 9, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 9 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

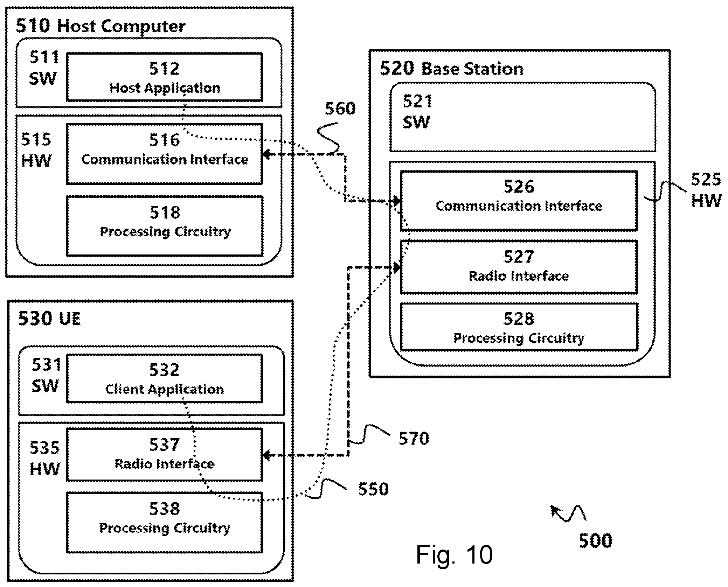

FIGURE 10 illustrates an example host computer communicating via a base station with a user equipment over a partially wireless connection, according to certain embodiments. Example implementations, in accordance with an embodiment of the UE, base station and host computer discussed in the preceding paragraphs will now be described with reference to FIGURE 10. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 10) served by base station 520. Communication interface 526 may be configured to facilitate connection 560 to host computer 510. Connection 560 may be direct, or it may pass through a core network (not shown in FIGURE 10) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 10 may be similar or identical to host computer 430, one of base stations 412a, 412b, 412c and one of UEs 491, 492 of FIGURE 8, respectively. This is to say, the inner workings of these entities may be as shown in FIGURE 10 and independently, the surrounding network topology may be that of FIGURE 8.

In FIGURE 10, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., based on load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the signaling overhead and reduce latency, which may provide faster internet access for users.

A measurement procedure may be provided for monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

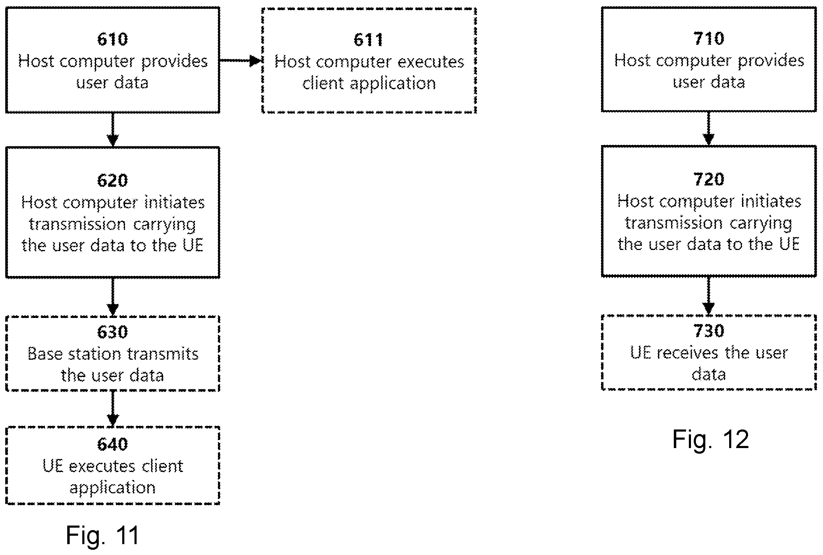

FIGURE 11 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 11 will be included in this section.

In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 12 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 12 will be included in this section.

In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

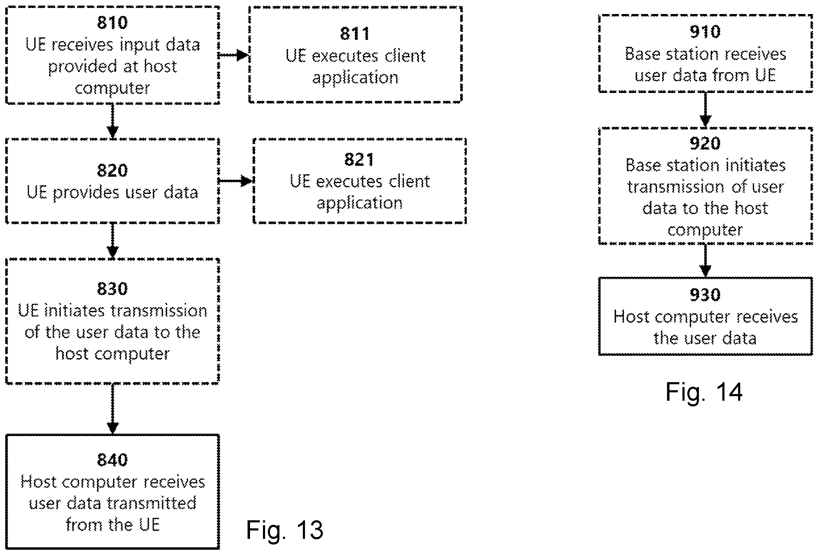

FIGURE 13 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 13 will be included in this section.

In step 810 (which may be optional), the UE receives input data provided by the host computer. Additionally, or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 14 is a flowchart illustrating a method implemented in a communication system, in accordance with one embodiment. The communication system includes a host computer, a base station and a UE which may be those described with reference to FIGURES 9 and 10. For simplicity of the present disclosure, only drawing references to FIGURE 14 will be included in this section.

In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure.

## Claims

1. A method performed by a wireless device operating in dual connectivity with a master cell group (MCG) comprising a first network node and a secondary cell group (SCG) comprising a second network node, the method comprising:
detecting (512) a failure on the SCG;
including (514) a first set of information associated with the detected failure on the SCG in a first message; **characterized by** further comprising determining (516) whether the MCG is suspended;
upon determining the MCG is not suspended, transmitting (518) the first message to the first network node;
upon determining the MCG is suspended:
including (520) a second set of information associated with the detected failure on the SCG in a second message; and
transmitting (526) the first message and the second message to a third network node.

2. The method of claim 1, further comprising performing (528) one of a reestablishment procedure, handover procedure, and access procedure with respect to the third network node.

3. The method of any one of claims 1-2, wherein the first message and the second message comprise a combined message including the first set of information and the second set of information.

4. The method of any one of claims 1-3, wherein the second set of information includes one or more of:
a cell identifier of a PSCell in which the wireless device detected the failure;
a cell identifier of a PSCell in which the wireless device received a last executed reconfiguration with sync message for the SCG;
a time between a reception of a last executed reconfiguration with sync message for the SCG and a time of detecting the failure; and
a cell identifier of a PCell at a time of declaring the failure.

5. The method of any one of claims 1-4, wherein the second set of information includes one or more of a failure type and a time of failure.

6. The method of any one of claims 1-5, wherein the second set of information includes random access information.

7. The method of any one of claims 1-6, wherein detecting the failure on the SCG comprises one of detecting a radio link failure and detecting a handover failure.

8. The method of any one of claims 1-7, further comprising:
transmitting (522) an indication to a network node that the second set of information is available at the wireless device; and
receiving (524) a request from the network node for the second set of information.

9. A wireless device (110) capable of operating in dual connectivity with a master cell group (MCG) comprising a first network node (160) and a secondary cell group (SCG) comprising a second network node (160), the wireless device comprising processing circuitry (120) operable to:
detect a failure on the SCG;
include a first set of information associated with the detected failure on the SCG in a first message; **characterized by** further comprising determine whether the MCG is suspended;
upon determining the MCG is not suspended, transmit the first message to the first network node;
upon determining the MCG is suspended:
include a second set of information associated with the detected failure on the SCG in a second message; and
transmit the first message and the second message to a third network node.

10. A method performed by a third network node, the method comprising:
receiving (616) a message from a wireless device operating in dual connectivity with a master cell group (MCG) and a secondary cell group (SCG), the message including a set of information with respect to a failure detected by the wireless device with respect to the SCG; and
transmitting (618) the set of information with respect to the detected failure to a first network node in the MCG.

11. The method of claim 10, wherein the set of information includes one or more of:
a cell identifier of a PSCell in which the wireless device detected the failure;
a cell identifier of a PSCell in which the wireless device received a last executed reconfiguration with sync message for the SCG;
a time between a reception of a last executed reconfiguration with sync message for the SCG and a time of detecting the failure; and
a cell identifier of a PCell at a time of declaring the failure.

12. The method of any one of claims 10-11, wherein the set of information includes one or more of a failure type and a time of failure.

13. The method of any one of claims 10-12, wherein the set of information includes random access information.

14. The method of any one of claims 10-13, wherein the failure on the SCG comprises one of a radio link failure and a handover failure, and optionally further comprising:
receiving (612) an indication from the wireless device that the set of information is available at the wireless device; and
transmitting (614) a request to the wireless device for the set of information.

15. A network node (160) comprising processing circuitry (170) operable to:
receive a message from a wireless device (110) operating in dual connectivity with a master cell group (MCG) and a secondary cell group (SCG), the message including a set of information with respect to a failure detected by the wireless device with respect to the SCG; and
transmit the set of information with respect to the detected failure to a first network node (160) in the MCG.

## Patentansprüche

1. Verfahren, das von einer drahtlosen Vorrichtung durchgeführt wird, die in dualer Konnektivität mit einer Master-Zellengruppe (MCG), die einen ersten Netzwerkknoten umfasst, und einer sekundären Zellengruppe (SCG), die einen zweiten Netzwerkknoten umfasst, betrieben wird, wobei das Verfahren umfasst:
Erkennen (512) eines Fehlers in der SCG;
Beinhalten (514) eines ersten Satzes von Informationen, die dem erkannten Fehler in der SCG zugeordnet sind, in einer ersten Nachricht; **dadurch gekennzeichnet, dass** es weiter Bestimmen (516) umfasst, ob die MCG ausgesetzt ist;
bei Bestimmen, dass die MCG nicht ausgesetzt ist, Senden (518) der ersten Nachricht an den ersten Netzwerkknoten;
bei Bestimmen, dass die MCG ausgesetzt ist:
Beinhalten (520) eines zweiten Satzes von Informationen, die dem erkannten Fehler in der SCG zugeordnet sind, in einer zweiten Nachricht; und
Senden (526) der ersten Nachricht und der zweiten Nachricht an einen dritten Netzwerkknoten.

2. Verfahren nach Anspruch 1, das weiter das Durchführen (528) eines von einer Wiederherstellungsprozedur, einer Übergabeprozedur und einer Zugriffsprozedur in Bezug auf den dritten Netzwerkknoten umfasst.

3. Verfahren nach einem der Ansprüche 1-2, wobei die erste Nachricht und die zweite Nachricht eine kombinierte Nachricht umfassen, die den ersten Satz von Informationen und den zweiten Satz von Informationen beinhaltet.

4. Verfahren nach einem der Ansprüche 1-3, wobei der zweite Satz von Informationen eines oder mehr beinhaltet von:
einer Zellenkennung einer PSCell, in der die drahtlose Vorrichtung den Fehler erkannt hat;
einer Zellenkennung einer PSCell, in der die drahtlose Vorrichtung eine letzte ausgeführte Neukonfiguration mit Synchronisierungsnachricht für die SCG empfangen hat;
einer Zeit zwischen einem Empfang einer letzten ausgeführten Neukonfiguration mit Synchronisierungsnachricht für die SCG und einem Zeitpunkt zum Erkennen des Fehlers; und
einer Zellenkennung einer PCell zu einem Zeitpunkt der Deklaration des Fehlers.

5. Verfahren nach einem der Ansprüche 1-4, wobei der zweite Satz von Informationen eines oder mehr von einem Fehlertyp und einem Fehlerzeitpunkt beinhaltet.

6. Verfahren nach einem der Ansprüche 1-5, wobei der zweite Satz von Informationen Direktzugriffsinformationen beinhaltet.

7. Verfahren nach einem der Ansprüche 1-6, wobei Erkennen des Fehlers in der SCG eines von Erkennen eines Funkverbindungsfehlers und Erkennen eines Übergabefehlers umfasst.

8. Verfahren nach einem der Ansprüche 1-7, weiter umfassend:
Senden (522) einer Angabe an einen Netzwerkknoten, dass der zweite Satz von Informationen an der drahtlosen Vorrichtung verfügbar ist; und
Empfangen (524) einer Anforderung vom Netzwerkknoten für den zweiten Satz von Informationen.

9. Drahtlose Vorrichtung (110), die zum Betreiben in dualer Konnektivität mit einer Master-Zellengruppe (MCG), die einen ersten Netzwerkknoten (160) umfasst, und einer sekundären Zellengruppe (SCG), die einen zweiten Netzwerkknoten (160) umfasst, in der Lage ist, wobei die drahtlose Vorrichtung eine Verarbeitungsschaltung (120) umfasst, die betreibbar ist, um
einen Fehler in der SCG zu erkennen;
einen ersten Satz von Informationen, die dem erkannten Fehler in der SCG zugeordnet sind, in einer ersten Nachricht zu beinhalten **dadurch gekennzeichnet, dass** sie weiter Bestimmen umfasst, ob die MCG ausgesetzt ist;
bei Bestimmen, dass die MCG nicht ausgesetzt ist, die erste Nachricht an den ersten Netzwerkknoten zu senden;
bei Bestimmen, dass die MCG ausgesetzt ist:
einen zweiten Satz von Informationen, die dem erkannten Fehler in der SCG zugeordnet sind, in einer zweiten Nachricht zu beinhalten; und
die erste Nachricht und die zweite Nachricht an einen dritten Netzwerkknoten zu senden.

10. Verfahren, das von einem dritten Netzwerkknoten durchgeführt wird, wobei das Verfahren umfasst:
Empfangen (616) einer Nachricht von einer drahtlosen Vorrichtung, die in dualer Konnektivität mit einer Master-Zellengruppe (MCG) und einer sekundären Zellengruppe (SCG) betrieben wird, wobei die Nachricht einen Satz von Informationen in Bezug auf einen Fehler beinhaltet, der von der drahtlosen Vorrichtung in Bezug auf die SCG erkannt wird; und
Senden (618) des Satzes von Informationen in Bezug auf den erkannten Fehler an einen ersten Netzwerkknoten in der MCG.

11. Verfahren nach Anspruch 10, wobei der Satz von Informationen eines oder mehrere beinhaltet von:
einer Zellenkennung einer PSCell, in der die drahtlose Vorrichtung den Fehler erkannt hat;
einer Zellenkennung einer PSCell, in der die drahtlose Vorrichtung eine letzte ausgeführte Neukonfiguration mit Synchronisierungsnachricht für die SCG empfangen hat;
einer Zeit zwischen einem Empfang einer letzten ausgeführten Neukonfiguration mit Synchronisierungsnachricht für die SCG und einem Zeitpunkt zum Erkennen des Fehlers; und
einer Zellenkennung einer PCell zu einem Zeitpunkt der Deklaration des Fehlers.

12. Verfahren nach einem der Ansprüche 10-11, wobei der Satz von Informationen eines oder mehr von einem Fehlertyp und einem Fehlerzeitpunkt beinhaltet.

13. Verfahren nach einem der Ansprüche 10-12, wobei der Satz von Informationen Direktzugriffsinformationen beinhaltet.

14. Verfahren nach einem der Ansprüche 10-13, wobei der Fehler in der SCG einen von einem Funkverbindungsfehler und einem Übergabefehler umfasst, und optional weiter umfassend:
Empfangen (612) einer Angabe von der drahtlosen Vorrichtung, dass der Satz von Informationen an der drahtlosen Vorrichtung verfügbar ist; und
Senden (614) einer Anforderung für den Satz von Informationen an die drahtlose Vorrichtung.

15. Netzwerkknoten (160), der eine Verarbeitungsschaltung (170) umfasst, die betreibbar ist, um:
eine Nachricht von einer drahtlosen Vorrichtung (110) zu empfangen, die in dualer Konnektivität mit einer Master-Zellengruppe (MCG) und einer sekundären Zellengruppe (SCG) betrieben wird, wobei die Nachricht einen Satz von Informationen in Bezug auf einen Fehler beinhaltet, der von der drahtlosen Vorrichtung in Bezug auf die SCG erkannt wird; und
den Satz von Informationen in Bezug auf den erkannten Fehler an einen ersten Netzwerkknoten (160) in der MCG zu senden.

## Revendications

1. Procédé exécuté par un dispositif sans fil fonctionnant en double connectivité avec un groupe de cellules maîtresses (MCG) comprenant un premier nœud de réseau et un groupe de cellules secondaire (SCG) comprenant un deuxième nœud de réseau, le procédé comprenant :
la détection (512) d'une défaillance sur le SCG ;
l'inclusion (514) d'un premier ensemble d'informations associées à la défaillance détectée sur le SCG dans un premier message ; **caractérisé en ce qu'**il comprend en outre la détermination (516) pour établir si le MCG est suspendu ;
lorsqu'il est déterminé que le MCG n'est pas suspendu, la transmission (518) du premier message au premier nœud de réseau ;
lorsqu'il est déterminé que le MCG est suspendu :
l'inclusion (520) d'un second ensemble d'informations associées à la défaillance détectée sur le SCG dans un second message ; et
la transmission (526) du premier message et du second message à un troisième nœud de réseau.

2. Procédé selon la revendication 1, comprenant en outre l'exécution (528) de l'une parmi une procédure de rétablissement, une procédure de transfert intercellulaire et une procédure d'accès par rapport au troisième nœud de réseau.

3. Procédé selon l'une quelconque des revendications 1-2, dans lequel le premier message et le second message comprennent un message combiné incluant le premier ensemble d'informations et le second ensemble d'informations.

4. Procédé selon l'une quelconque des revendications 1-3, dans lequel le second ensemble d'informations inclut un ou plusieurs parmi :
un identifiant de cellule d'une cellule secondaire primaire, PSCell, dans laquelle le dispositif sans fil a détecté la défaillance ;
un identifiant de cellule d'une PSCell dans laquelle le dispositif sans fil a reçu une dernière reconfiguration exécutée avec un message de synchronisation pour le SCG ;
un temps entre une réception d'une dernière reconfiguration exécutée avec un message de synchronisation pour le SCG et un moment de la détection de la défaillance ; et
un identifiant de cellule d'une cellule paramétrique, PCell, au moment de la déclaration de la défaillance.

5. Procédé selon l'une quelconque des revendications 1-4, dans lequel le second ensemble d'informations inclut un ou plusieurs éléments parmi un type de défaillance et un moment de défaillance.

6. Procédé selon l'une quelconque des revendications 1-5, dans lequel le second ensemble d'informations inclut des informations d'accès aléatoire.

7. Procédé selon l'une quelconque des revendications 1-6, dans lequel la détection de la défaillance sur le SCG comprend l'une parmi la détection d'une défaillance de liaison radio et la détection d'une défaillance de transfert intercellulaire.

8. Procédé selon l'une quelconque des revendications 1-7, comprenant en outre :
la transmission (522) d'une indication à un nœud de réseau selon laquelle le second ensemble d'informations est disponible au niveau du dispositif sans fil ; et
la réception (524) d'une demande du nœud de réseau pour le second ensemble d'informations.

9. Dispositif sans fil (110) apte à fonctionner en double connectivité avec un groupe de cellules maîtresses (MCG) comprenant un premier nœud de réseau (160) et un groupe de cellules secondaire (SCG) comprenant un deuxième nœud de réseau (160), le dispositif sans fil comprenant un ensemble de circuits de traitement (120) permettant de :
détecter une défaillance sur le SCG ;
inclure un premier ensemble d'informations associées à la défaillance détectée sur le SCG dans un premier message ; **caractérisé en ce qu'**il comprend en outre la détermination pour établir si le MCG est suspendu ;
lorsqu'il est déterminé que le MCG n'est pas suspendu, transmettre le premier message au premier nœud de réseau ;
lorsqu'il est déterminé que le MCG est suspendu :
inclure un second ensemble d'informations associées à la défaillance détectée sur le SCG dans un second message ; et
transmettre le premier message et le second message à un troisième nœud de réseau.

10. Procédé réalisé par un troisième nœud de réseau, le procédé comprenant :
la réception (616) d'un message provenant d'un dispositif sans fil fonctionnant en double connectivité avec un groupe de cellules maîtresses (MCG) et un groupe de cellules secondaire (SCG), le message incluant un ensemble d'informations relatives à une défaillance détectée par le dispositif sans fil par rapport au SCG ; et
la transmission (618) de l'ensemble d'informations relatives à la défaillance détectée à un premier nœud de réseau dans le MCG.

11. Procédé selon la revendication 10, dans lequel l'ensemble d'informations inclut un ou plusieurs des éléments suivants :
un identifiant de cellule d'une PSCell dans laquelle le dispositif sans fil a détecté la défaillance ;
un identifiant de cellule d'une PSCell dans laquelle le dispositif sans fil a reçu une dernière reconfiguration exécutée avec un message de synchronisation pour le SCG ;
un temps entre une réception d'une dernière reconfiguration exécutée avec un message de synchronisation pour le SCG et un moment de la détection de la défaillance ; et
un identifiant de cellule d'une PCell au moment de la déclaration de la défaillance.

12. Procédé selon l'une quelconque des revendications 10-11, dans lequel l'ensemble d'informations inclut un ou plusieurs éléments parmi un type de défaillance et un moment de défaillance.

13. Procédé selon l'une quelconque des revendications 10-12, dans lequel l'ensemble d'informations inclut des informations d'accès aléatoire.

14. Procédé selon l'une quelconque des revendications 10-13, dans lequel la défaillance du SCG comprend l'une parmi une défaillance de liaison radio ou une défaillance de transfert intercellulaire, et comprenant éventuellement en outre :
la réception (612) d'une indication du dispositif sans fil selon laquelle l'ensemble d'informations est disponible au niveau du dispositif sans fil ; et
la transmission (614) d'une demande au dispositif sans fil pour l'ensemble d'informations.

15. Nœud de réseau (160) comprenant un ensemble de circuits de traitement (170) permettant de :
recevoir un message d'un dispositif sans fil (110) fonctionnant en double connectivité avec un groupe de cellules maîtresses (MCG) et un groupe de cellules secondaire (SCG), le message incluant un ensemble d'informations relatives à une défaillance détectée par le dispositif sans fil par rapport au SCG ; et
transmettre l'ensemble d'informations relatives à la défaillance détectée à un premier nœud de réseau (160) dans le MCG.
